# EUROPÄISCHE PATENTSCHRIFT

(11) **EP 0 603 122 B1**
(45) Veröffentlichungstag und Bekanntmachung des Hinweises auf die Patenterteilung: **27.12.1996**
(21) Anmeldenummer: 93810831.3
(22) Anmeldetag: 26.11.1993
(51) Int. Cl.: B23B 51/04, E21B 10/02

(54) **Bohrkrone mit Querschnittsverstärkungen**
Tubular drill with reinforcement sections
Foret tubulaire avec sections de renforcement

(30) Priorität: 18.12.1992 DE 4242910
(43) Veröffentlichungstag der Anmeldung: 22.06.1994
(73) Patentinhaber: HILTI Aktiengesellschaft, 9494 Schaan (LI)
(72) Erfinder: Kleine, Werner, D-28832 Achim (DE)
(74) Vertreter: Wildi, Roland

(56) Entgegenhaltungen:
- EP-A- 0 375 526
- DE-C- 920 701
- FR-A- 2 258 922
- FR-A- 2 679 805
- US-A- 2 804 895
- US-A- 3 331 455

## Beschreibung

Die Erfindung betrifft eine Hohlbohrkrone mit becherförmigem Trägerkörper, der einen bohrrichtungsseitigen, mit Schneiden bestückten Stirnbereich aufweist, an den sich entgegen der Bohrrichtung ein hohlzylindrisches Führungsteil anschliesst, welches in ein Verbindungsmittel aufweisendes Halsteil mündet.

Hohlbohrkronen werden zur Herstellung grosser Bohrungen in Bauteilen verwendet. Zumeist dienen solch grosse Bohrungen der Durchführung von Leitungen und dergleichen. Da es sich bei den in Betracht kommenden Bauteilen meistens um hartes Material wie Beton, Gestein und dgl. handelt, wird von den Hohlbohrkronen gefordert, dass sie vor allem mit Schlageinwirkung betrieben werden können, dh sie kommen in Verbindung mit Antriebsgeräten zum Einsatz, welche sowohl eine Dreh- als auch eine Schlagbewegung abgeben.

Wie beispielsweise die DE-OS 36 19 334 zeigt, bestehen Hohlbohrkronen der in Rede stehenden Art aus einem becherförmigen Trägerkörper, welcher ein hohlzylindrisches Führungsteil aufweist. In Bohrrichtung schliesst sich an das Führungsteil ein Stirnbereich mit Schneiden an. Entgegen der Bohrrichtung ist das Führungsteil mit einem Halsteil versehen, das gegenüber dem Führungsteil einen geringeren Aussendurchmesser aufweist sowie mit Verbindungsmitteln versehen ist, welche zumeist in Form eines Innengewindes ausgebildet sind, welches mit einem entsprechenden Aussengewinde eines die Verbindung zum Antriebsgerät bewerkstelligenden Adapters korrespondiert.

Im Betrieb arbeiten die Schneiden aus dem zu bearbeitenden Bauteil einen Ringspalt heraus, dessen grösserer Durchmesser den Durchmesser der herzustellenden Bohrung darstellt. Da das gesamte Material im Bereich des Ringspaltes abgetragen, zerkleinert und abtransportiert werden muss, wird versucht, rein aus ökonomischen Gründen diesen Ringspalt in seiner Breite möglichst gering zu halten. Ein solcher Ringspalt mit geringer Breite bringt damit gewisse Vorteile aus der Sicht des Bearbeitungsaufwandes, er stellt jedoch hohe Anforderungen an die Dimensionierung der zum Einsatz gelangenden Hohlbohrkronen.

Eine weitere, einen becherförmigen Trägerkörper aufweisende Hohlbohrkrone zum Herstellen von Stangen und Wellen die aus einem stabförmigen Rohling herausgearbeitet werden, ist aus der dem Oberbegriff des Patentanspruch 1 entsprechenden DE-C-920 701 bekannt. Der Trägerkörper weist einen bohrrichtungsseitigen, mit Schneiden bestückten Stirnbereich auf, an den sich entgegen der Bohrrichtung ein hohlzylindrisches Führungsteil anschliesst, welches in ein Verbindungsmittel aufweisendes Halsteil mündet. Der Trägekörper weist in axialer Verlängerung der Schneiden Querschnittsverstärkungen auf, die sich entgegen der Bohrrichtung bis zum Übergang vom Stirnbereich zum Führungsteil erstrecken.

Aufgrund der auf die Hohlbohrkronen einwirkenden Beanspruchungen, wie Drehmoment und Schlagenwirkung, wäre es erwünscht sowohl das Führungsteil als auch den Stirnbereich mit einer grossen Wandstärke zu versehen. Dies widerspricht allerdings den genannten Forderungen im Zusammenhang mit dem Bearbeitungsaufwand und führt nebst einer Gewichtszunahme ferner dazu, dass während des Betriebs grosse Reibungsverluste auftreten, welche durch Reibung der Innen- und Aussenkonturen des Trägekörpers am Bauteil entstehen.

Der Erfindung liegt die Aufgabe zugrunde, eine Hohlbohrkrone zu schaffen, die sämtliche mit dem Bearbeitungsaufwand zusammenhängenden Forderungen erfüllt und darüber hinaus allen Beanspruchungen gerecht wird und gegebenenfalls im Zusammenhang mit Saugbohren Vorteile aufweist.

Erfindungsgemäss wird die Aufgabe dadurch gelöst, dass der Trägerkörper in axialer Verlängerung der Schneiden sich bis zu dem der Bohrrichtung entgegengesetzten Ende erstreckende Querschnittsverstärkungen aufweist.

Die Querschnittsverstärkungen schliessen sich damit entgegen der Bohrrichtung unmittelbar an die Schneiden an und setzen sich in Längsrichtung des Trägekörpers fort, bis hin zu dem der Bohrrichtung abgewandten, vom Halsteil gebildeten Ende. Damit wird der Trägekörper verstärkt, ohne dass dessen Wandstärke insgesamt erhöht werden muss. Die Querschnittsverstärkungen wirken sich vorteilhaft auf die Hohlbohrkrone aus, sowohl im Hinblick auf das Drehmoment als auch auf die Schlageinwirkung. Hinsichtlich des einwirkenden Drehmomentes wird die Verwindungssteifigkeit erhöht und hinsichtlich der Schlageinwirkung wird die Stosswelle von dem entgegen der Bohrrichtung abgewandten Ende über die Querschnittsverstärkungen auf die Schneiden übertragen. Trotz Erfüllung all dieser Anforderungen kann das Gewicht der Hohlbohrkrone gering gehalten werden, so dass zudem eine Steigerung der Bohrleistung erreicht wird.

Nachdem die Schneiden im Bereich der Querschnittsverstärkungen angeordnet sind, kommt ein weiterer Vorteil zum Tragen, indem mehr Kontaktflächen für die Befestigung der Schneiden zur Verfügung stehen. Damit erfährt die zumeist auf Lötbasis bestehende Verbindung zwischen Stirnbereich des Trägekörpers und Schneiden eine wesentliche Verbesserung.

In bevorzugter Weise sind die Querschnittsverstärkungen als parallel zur Bohrachse verlaufende Längsrippen ausgebildet. Solche Längsrippen wirken sich vorteilhaft auf die Dimensionierung sowie auf die Beanspruchungsarten der Hohlbohrkrone aus.

Bekanntlich erzeugen die hier in Rede stehenden Hohlbohrkronen im Betrieb einen relativ hohen Schallpegel. Dieser hohe Schallpegel rührt von den entstehenden Schwingungen her, welche verstärkt werden, da die Hohlbohrkrone im Sinne eines Resonanzkörpers wirkt. Es hat sich gezeigt, dass die Anordnung der Längsrippen zu einem Brechen dieser Schwingungen führt, so dass der Schallpegel der mit diesen Längsrippen versehenen Hohlbohrkronen wesentlich herabgesetzt werden kann.

Entlang des Stirnbereiches sowie des Führungsteiles des Trägekörpers sind die Längsrippen zweckmässigerweise radial zum Zentrum gerichtete Innenrippen. Die Ausbildung der Längsrippen als Innenrippen hat den Vorteil, dass insbesondere im Zusammenhang mit dem Abtransport des abgearbeiteten Bohrgutes keine Behinderungen entstehen, da ohnehin in aller Regel Massnahmen getroffen werden, dass dieses Bohrgut entlang der Aussenkontur des Trägekörpers abgeführt wird. Somit besteht die Möglichkeit, die Aussenkontur des Trägekörpers vollkommen zylindrisch auszubilden, was auch zur weiteren Herabsetzung allfälliger Reibungsverluste führt.

Um selbst durch die Anordnung der Innenrippen keine Reibungsverluste hervorzurufen, sind diese vorteilhaft mit einer im Querschnitt gesehenen, konvex gebogenen Schulter versehen. Diese Schulter wirkt im Betrieb nach Art einer Gleitkufe, so dass keine Behinderungen entstehen können. Die gleitkufenartige Wirkung kann noch unterstützt werden, wenn beidseits der Schulter gerundete Uebergänge zur Innenkontur des Trägekörpers vorgesehen werden.

Die Dimensionierung der Innenrippen führt zu gewissen Schwierigkeiten, indem hier verschiedene Einflussfaktoren massgebend sind. Während einer dieser Einflussfaktoren die angestrebte Verstärkung darstellt, richtet sich ein weiterer Einflussfaktor nach dem Bearbeitungsaufwand, nämlich in der Weise, dass die Breite des herauszuarbeitenden Ringspaltes nicht zu stark erhöht wird. Diesbezüglich hat sich gezeigt, dass optimale Verhältnisse dann erreicht werden, wenn die Innenrippen die Innenkontur des Trägerkörpers um das 0,2- bis 0,5-fache der Wandstärke des Trägekörpers überragen, wobei in bevorzugter Weise sowohl Führungsteil als auch Stirnbereich des Trägekörpers eine einheitliche Wandstärke aufweisen.

Im Bereich des Halsteiles sind die Längsrippen bevorzugt als radial nach aussen gerichtete Aussenrippen ausgebildet. Hinsichtlich der Aussenrippen bestehen insoweit keine Dimensionierungsprobleme, so dass es sich - nicht zuletzt auch aus optischen Gründen - anbietet, die Aussenrippen so zu dimensionieren, dass sie sich in Bohrrichtung erweitern und zwar mit einem dem Aussendurchmesser des Halsteiles entsprechenden radialen Kleinstmass und einem dem Aussendurchmesser des Führungsteiles entsprechenden radialen Grösstmass.

Nachdem der Trägekörper becherförmig ausgebildet ist, bildet ein Bodenteil die Begrenzung zwischen Halsteil und Führungsteil. Bezüglich der Längsrippen bildet somit auch dieses Bodenteil die jeweilige Begrenzung, nämlich derart, dass sich die Innenrippen entgegen der Bohrrichtung im wesentlichen bis zur Innenkontur des Bodenteiles und die Aussenrippen in Bohrrichtung bis zur Aussenkontur des Bodenteils erstrecken.

Die Erfindung wird nachstehend anhand von Zeichnungen, welche ein Ausführungsbeispiel wiedergeben, näher erläutert. Es zeigen:

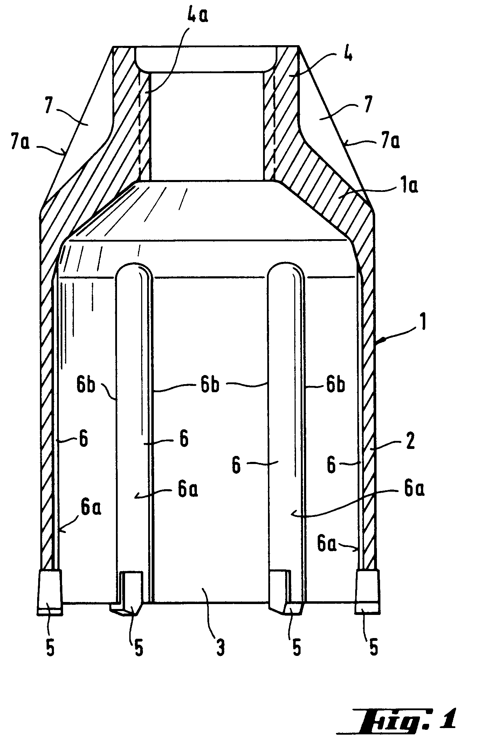

- Fig. 1: eine Hohlbohrkrone gemäss Erfindung im Längsschnitt;
- Fig. 2: eine Draufsicht auf den Stirnbereich der Bohrkrone entsprechend Fig. 1;
- Fig. 3: eine Draufsicht auf das Halsteil der Bohrkrone entsprechnd Fig. 1.

Wie alle drei Figuren zeigen, besteht die Hohlbohrkrone aus einem becherförmigen Trägerkörper 1, der ein hohlzylindrisches Führungsteil 2 aufweist. In Bohrrichtung schliesst sich an das Führungsteil 2 ein Stirnbereich 3 an, welcher mit Schneiden 5 bestückt ist. Entgegen der Bohrrichtung schliesst sich an das Führungsteil 2 ein Halsteil 4 an, das gegenüber dem Führungsteil 2 einen geringeren Aussendurchmesser aufweist. Das Halsteil 4 ist mit einem Verbindungsmittel 4a in Form eines Gewindes versehen.

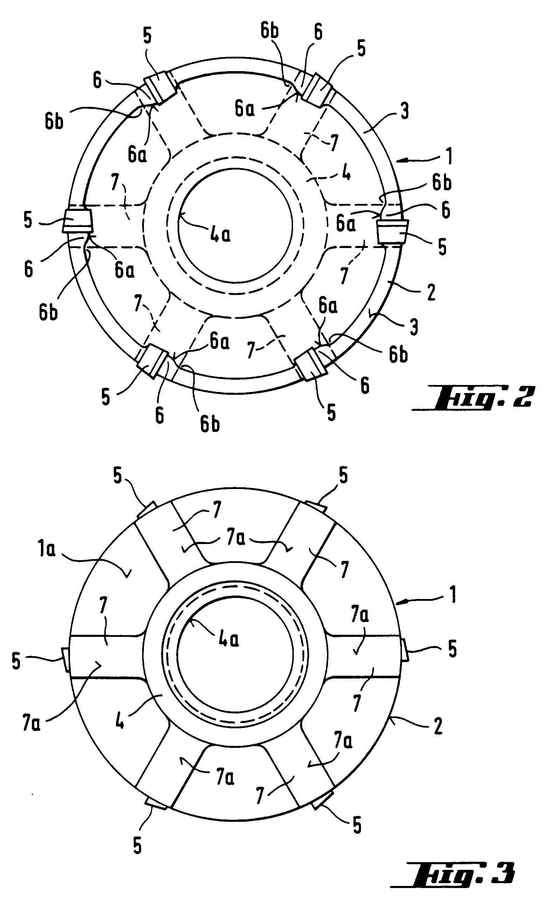

Entlang des Führungsbereiches und des Stirnbereiches erstrecken sich Innenrippen 6 und zwar entgegen der Bohrrichtung bis nahezu einem Bodenteil 1a des Trägekörpers 1. Die Innenrippen 6 überragen die Innenkontur des Trägekörpers 1, wie dies insbesondere Fig. 2 zeigt. Darüber hinaus zeigt Fig. 2, wie die Innenrippen 6 eine konvex gebogene Schulter 6a aufweisen, die über gerundete Uebergänge 6b zur Innenkontur des Trägerkörpers 1 verläuft.

Entgegen der Bohrrichtung in axialer Verlängerung der Innenrippen 6 ist der Trägekörper 1 mit Aussenrippen 7 versehen, welche sich entlang des Halsteiles 4 in Bohrrichtung bis hin zur Aussenkontur des Bodenteiles 1a erstrecken. Die Aussenrippen 7 mit ihren Schultern 7a erweitern sich in ihrem Radialmass, so dass sie den Raum zwischen dem der Bohrrichtung abgewandten Ende des Halsteiles 4 und der Aussenkontur des Bodenteiles 1a des Trägekörpers 1 überspannen.

## Patentansprüche

1. Hohlbohrkrone mit becherförmigem Trägerkörper (1), der einen bohrrichtungsseitigen, mit Schneiden (5) bestückten Stirnbereich (3) aufweist, an den sich entgegen der Bohrrichtung ein hohlzylindrisches Führungsteil (2) anschliesst, welches in ein Verbindungsmittel (4a) aufweisendes Halsteil (4) mündet, **dadurch gekennzeichnet,** dass der Trägerkörper (1) in axialer Verlängerung der Schneiden (5) sich umittelbar daran anschliessende, sich bis zu dem der Bohrrichtung entgegengesetzten, vom Halsteil (4) gebildeten Ende erstreckende Querschnittsverstärkungen aufweist.

2. Hohlbohrkrone nach Anspruch 1, dadurch gekennzeichnet, dass die Querschnittsverstärkungen als parallel zur Bohrachse verlaufende Längsrippen ausgebildet sind.

3. Hohlbohrkrone nach Anspruch 2, dadurch gekennzeichnet, dass die Anzahl der Längsrippen der Anzahl der Schneiden (5) entspricht.

4. Hohlbohrkrone nach Anspruch 2 oder 3, dadurch gekennzeichnet, dass die Längsrippen entlang des Stirnbereiches (3) und des Führungsbereiches (2) radial zum Zentrum gerichtete Innenrippen (6) sind.

5. Hohlbohrkrone nach Anspruch 4, dadurch gekennzeichnet, dass die Innenrippen (6) im Querschnitt gesehen eine konvex gebogene Schulter (6a) aufweisen.

6. Hohlbohrkrone nach Anspruch 4, dadurch gekennzeichnet, dass die Innenrippen (6) beidseits der Schulter (6a) einen gerundeten Uebergang (6b) zur Innenkontur des Trägerkörpers (1) aufweisen.

7. Hohlbohrkrone nach einem der Ansprüche 4 bis 6, dadurch gekennzeichnet, dass die Innenrippen (6) die Innenkontur des Trägekörpers (1) um das 0,2- bis 0,5-fache der Wandstärke des Führungsteiles (2) bzw. des Stirnbereiches (3) überragen.

8. Hohlbohrkrone nach einem der Ansprüche 1 bis 7, dadurch gekennzeichnet, dass die Längsrippen entlang des Halsteiles (4) radial nach, aussen gerichtete Aussenrippen (7) sind.

9. Hohlbohrkrone nach Anspruch 8, dadurch gekennzeichnet, dass die Schulter (7a) der Aussenrippen (7) sich in Bohrrichtung erweitern, mit einem dem Aussendurchmesser des Halsteiles (4) entsprechenden radialen Kleinstmass und einem dem Aussendurchmesser des Führungsteils (2) entsprechenden radialen Grösstmass.

## Claims

1. Tubular drillbit with cupshaped support body (1) comprising an end area (3) in the drilling direction, which is fitted with cutters (5) and which is, opposite to the drilling direction, adjacent a hollow cylindrical guide element (2) which terminates in a neck portion (4) with a connecting means (4a), **characterised in that** the support body (1) has in the axial extension of the cutters (5) thereto directly adjacent cross-sectional reinforcements, which extend up to the end which is formed by the neck portion (4) and in opposition to the drilling direction.

2. Tubular drillbit according to Claim 1, **characterised in that** the cross-sectional reinforcements are arranged as longitudinal webs which extend parallel to the drill axis.

3. Tubular drillbit according to Claim 2, **characterised in that** the number of longitudinal webs corresponds with the number of cutters (5).

4. Tubular drillbit according to Claim 2 or 3, **characterised in that** the longitudinal webs are inner webs (6) which are oriented radially to the centre along the end area (3) and the guide area (2) and.

5. Tubular drillbit according to Claim 4, **characterised in that** the inner webs (6) have, cross-sectionally seen, a convex bent shoulder (6a).

6. Tubular drillbit according to Claim 4, **characterised in that** the inner webs (6) have on both sides of the shoulder (6a) a rounded transition (6b) to the inner contour of the carrier body (1).

7. Tubular drillbit according to one of Claims 4 to 6, **characterised in that** the inner webs (6) protrude over the inner contour of the support body (1) by between 0.2 and 0.5 times the wall thickness of the guide portion (2) or the end area (3).

8. Tubular drillbit according to one of Claims 1 to 7, **characterised in that** the longitudinal webs are outer webs (7) which are oriented radially outwards along the neck portion (4).

9. Tubular drillbit according to Claim 8, **characterised in that** the shoulder (7a) of the outer webs (7) expand in the drilling direction, with a radial minimum dimension to correspond with the outside diameter of the neck portion (4) and a radial maximum dimension to correspond with the outside diameter of the guide portion (4).

## Revendications

1. Foret tubulaire comprenant un corps porteur en forme de pot (1) comportant une zone frontale (3) qui est située sur la face orientée dans la direction de forage et est garnie de lames (5) et qui se prolonge, dans la direction opposée au forage, par une partie de guidage cylindrique creuse (2) qui débouche dans une partie formant col (4) comportant un moyen de liaison (4a), caractérisé en ce que le corps porteur (1) comporte, dans le prolongement axial des lames (5), des renforts de section qui sont directement accolés à ces dernières et qui s'étendent jusqu'à l'extrémité opposée à la direction de forage et formée par la partie formant col (4).

2. Foret tubulaire selon la revendication 1, caractérisé en ce que les renforts de section se présentent sous la forme de nervures longitudinales s'étendant parallèlement à l'axe de forage.

3. Foret tubulaire selon la revendication 2, caractérisé en ce que le nombre de nervures longitudinales correspond au nombre de lames (5).

4. Foret tubulaire selon la revendication 2 ou 3, caractérisé en ce que les nervures longitudinales sont des nervures intérieures (6) orientées radialement vers le centre le long de la zone frontale (3) et de la zone de guidage (2).

5. Foret tubulaire selon la revendication 4, caractérisé en ce que, vues en coupe transversale, les nervures intérieures (6), présentent un épaulement à courbure convexe (6a).

6. Foret tubulaire selon la revendication 4, caractérisé en ce que, de part et d'autre des épaulements (6a), les nervures intérieures (6) comportent une zone de transition arrondie (6b) avec le contour intérieur du corps porteur (1).

7. Foret tubulaire selon l'une des revendications 4 à 6, caractérisé en ce que les nervures intérieures (6) dépassent du contour intérieur du corps porteur (1) d'une distance comprise entre 0,2 et 0,5 fois l'épaisseur de paroi de la partie de guidage (2) ou de la zone frontale (3).

8. Foret tubulaire selon l'une des revendications 1 à 7, caractérisé en ce que les nervures longitudinales sont des nervures extérieures (7) orientées radialement vers l'extérieur le long de la partie formant col (4).

9. Foret tubulaire selon la revendication 8, caractérisé en ce que les épaulements (7a) des nervures extérieures (7) s'élargissent dans la direction de forage et présentent une dimension minimale radiale correspondant au diamètre extérieur de la partie formant col (4) et une dimension maximale radiale correspondant au diamètre extérieur de la partie de guidage (2).
